# EUROPEAN PATENT APPLICATION

(11) **EP 4 815 383 A1**
(43) Date of publication of application: **30.09.2026**
(21) Application number: 24905652.4
(22) Date of filing: 03.09.2024
(51) Int. Cl.: H04L 27/26

(54) **TIME-DOMAIN SAMPLING POINT EXTENSION METHOD AND DEVICE, STORAGE MEDIUM, AND ELECTRONIC DEVICE**

(30) Priority: 19.12.2023 CN 202311761942
(71) Applicant: ZTE CORPORATION, Shenzhen, Guangdong 518057 (CN)
(72) Inventor: XIA, Shuqiang, Shenzhen, Guangdong 518057 (CN); LI, Songqian, Shenzhen, Guangdong 518057 (CN); YU, Guanghui, Shenzhen, Guangdong 518057 (CN); HU, Liujun, Shenzhen, Guangdong 518057 (CN); MA, Yihua, Shenzhen, Guangdong 518057 (CN)
(74) Representative: Brunazzi, Stefano
(86) International application number: PCT/CN2024/116649
(87) International publication number: WO 2025/130160

(57) **Abstract**

The present disclosure provides a time-domain sampling point extension method and device, a storage medium, and an electronic device. The method comprises: by means of a sensing symbol following a first communication symbol, determining a weight matrix of the first communication symbol; on the basis of the weight matrix, adjusting the first communication symbol to generate a second communication symbol; and, on the basis of a time-domain sampling point of the second communication symbol, extending a time-domain sampling point of a cyclic prefix of the sensing symbol.

## Description

The present disclosure claims priority to the Chinese patent application filed with the China National Intellectual Property Administration on December 19, 2023, with the application No. 202311761942.7 and the title "Time-Domain Sampling Point Extension Method and Device, Storage Medium, and Electronic Device", the entire content of which is incorporated herein by reference.

### Technical Field

The present disclosure relates to the field of communications, and in particular, to a time-domain sampling point extension method and device, a storage medium, and an electronic device.

### Background

For communication services, an Integrated Sensing and Communication (ISAC) system based on Orthogonal Frequency-Division Multiplexing (OFDM) waveform can reuse the designs of existing Fifth Generation (5G) and Beyond 5G (B5G) mobile communication technologies to the maximum extent. In terms of sensing schemes, one drawback of the OFDM waveform is that a Cyclic Prefix (CP) limits the maximum sensing distance of an ISAC system. The cyclic prefix is initially designed for communication requirements without taking sensing demands into consideration. From the perspective of communication, the length of the cyclic prefix only needs to be greater than the delay spread of a wireless channel. When this design is adopted in communication systems, the maximum sensing distance of the ISAC system will be restricted, or excessive resource overhead will be incurred, since the maximum sensing distance of a sensing system is bound by the length of the cyclic prefix. Based on 5G systems, Table 1 below lists the maximum sensing distances corresponding to different subcarrier spacings.

**Table 1**

| | | | | |
|---|---|---|---|---|
| Subcarrier Spacing (kHz) | 15 | 30 | 60 | 120 |
| Cyclic Prefix Type 1 (µs) | 4.6875 | 2.34 | 1.17 | 0.58 |
| Maximum Sensing Distance (m) | 703 | 351 | 175 | 87 |
| Cyclic Prefix Type 2 (µs) | 16.6667 | 8.33 | 4.17 | 2.08 |
| Maximum Sensing Distance (m) | 2500 | 1250 | 625 | 312.5 |

It can be seen from Table 1 that the existing 5G standard only supports two types of cyclic prefixes. Although adding new types of cyclic prefixes or increasing the length of the cyclic prefix can solve the problems of limited maximum sensing distance and excessive resource overhead, such modifications will disrupt the frame structure of a New Radio (NR) system, increase the complexity of system design, and consequently severely degrade the performance of the communication system.

In the related art, no solution has been proposed to extend the cyclic prefix while being compatible with the existing frame structure of the NR system and flexibly supporting various sensing distances.

Therefore, it is necessary to improve the related art to overcome the above defects.

### Summary

Embodiments of the present disclosure provide a time-domain sampling point extension method and device, a storage medium, and an electronic device, which may at least solve the problem in the related art that no solution has been proposed to extend the cyclic prefix while being compatible with the existing frame structure of the NR system and flexibly supporting various sensing distances.

According to some embodiments of the present disclosure, a time-domain sampling point extension method is provided, including: determining a weight matrix of a first communication symbol according to a sensing symbol following the first communication symbol; adjusting the first communication symbol according to the weight matrix to generate a second communication symbol; and extending time-domain sampling points of a cyclic prefix of the sensing symbol by using one or more time-domain sampling points of the second communication symbol.

In an exemplary embodiment, before determining the weight matrix of the first communication symbol according to the sensing symbol following the first communication symbol, the time-domain sampling point extension method further includes: determining a length M of time-domain sampling points of the first communication symbol that are to be cyclically extended, wherein M is a positive integer; and extending the time-domain sampling points of the cyclic prefix of the sensing symbol by using the one or more time-domain sampling points of the second communication symbol includes: extending the time-domain sampling points of the cyclic prefix of the sensing symbol by using the last M time-domain sampling points of the second communication symbol.

In an exemplary embodiment, adjusting the first communication symbol according to the weight matrix to generate the second communication symbol includes: generating the second communication symbol according to the following formula: *C*₂ = (*I* + *W*)*C*₁, wherein *C*₁ represents the first communication symbol, *C*₂ represents the second communication symbol, *I* represents an identity matrix with a dimension of N×N, *W* represents the weight matrix with a dimension of N×N, and N denotes a quantity of time-domain sampling points of an effective part of the first communication symbol, N being a positive integer.

In an exemplary embodiment, determining the weight matrix of the first communication symbol according to the sensing symbol following the first communication symbol includes: determining a tolerance threshold *η* of a residual norm corresponding to the first communication symbol; performing the following updating operation: updating element values of a target weight matrix and determining the residual norm corresponding to the updated weight matrix according to a correspondence between the target weight matrix and the residual norm; repeatedly performing the updating operation until the finally determined residual norm is less than the tolerance threshold *η*; and determining a weight vector corresponding to the finally determined residual norm as the weight matrix.

In an exemplary embodiment, before determining the weight matrix of the first communication symbol, the time-domain sampling point extension method further includes: determining a signal d to be generated by the one or more time-domain sampling points, wherein the signal d is an arbitrary signal with a length of M, and the signal d includes at least one of: extended sampling points for the cyclic prefix of the sensing symbol, a linear frequency modulation signal with M sampling points, or a constant amplitude zero auto-correlation signal with a length of M.

In an exemplary embodiment, the time-domain sampling point extension method further includes: in a case where M is equal to 1, determining that the weight matrix is a sparse vector having only one non-zero element, wherein k denotes an index of the non-zero element, the element index k is configured by a system, and k is a positive integer.

In an exemplary embodiment, the time-domain sampling point extension method further includes: in a case where the first communication symbol has L subcarriers not used for communication and L is greater than M, determining that only M subcarriers of the L subcarriers in the second communication symbol are adopted to generate time-domain signals for extending the cyclic prefix, wherein L and M are positive integers.

In an exemplary embodiment, the time-domain sampling point extension method further includes: in a case where the first communication symbol has L subcarriers not used for communication and L is less than or equal to M, determining that all of the L subcarriers not used for communication in the second communication symbol are adopted to generate time-domain signals for extending the cyclic prefix, and Q subcarriers used for communication in the second communication symbol participate in extending the cyclic prefix, wherein Q=M-L, and Q is a positive integer.

In an exemplary embodiment, the time-domain sampling point extension method further includes: in a case where the first communication symbol has L subcarriers not used for communication, determining that only J subcarriers of the L subcarriers in the second communication symbol are adopted to generate time-domain signals for extending the cyclic prefix, wherein J is a positive integer less than L.

According to another embodiment of the present disclosure, a time-domain sampling point extension device is further provided, including: a first determining module, configured to determine a weight matrix of a first communication symbol according to a sensing symbol following the first communication symbol; an adjusting module, configured to adjust the first communication symbol according to the weight matrix to generate a second communication symbol; and a second determining module, configured to extend time-domain sampling points of a cyclic prefix of the sensing symbol by using one or more time-domain sampling points of the second communication symbol.

According to still another aspect of the embodiments of the present disclosure, a computer-readable storage medium is further provided. A computer program is stored in the computer-readable storage medium, and the computer program, when executed, implements the above-mentioned time-domain sampling point extension method.

According to still another aspect of the embodiments of the present disclosure, an electronic device is further provided, which includes a memory, a processor, and a computer program stored in the memory and executable on the processor. The processor runs the computer program to execute the above-mentioned time-domain sampling point extension method.

With the technical solution provided in the embodiments of the present disclosure, a weight matrix of a first communication symbol is determined according to a sensing symbol following the first communication symbol; the first communication symbol is adjusted according to the weight matrix to generate a second communication symbol; and time-domain sampling points of a cyclic prefix of the sensing symbol are extended by using one or more time-domain sampling points of the second communication symbol. According to the technical solutions of the embodiments of the present disclosure, the first communication symbol is adjusted based on the weight matrix to obtain the second communication symbol, and then the time-domain sampling points of the cyclic prefix of the sensing symbol are extended by using one or more time-domain sampling points of the second communication symbol. The above technical solutions solve the problem existing in the related art that no solution has been proposed to extend the cyclic prefix while being compatible with the existing frame structure of the NR system and flexibly supporting various sensing distances. The solution provided is compatible with the existing frame structure of the NR system and can flexibly support extended cyclic prefix for various sensing distances.

### Brief Description of the Drawings

The accompanying drawings described herein are intended to provide a further understanding of the present disclosure and constitute a part thereof. The exemplary embodiments of the present disclosure and the descriptions thereof are used to explain the present disclosure, and shall not be construed as undue limitations on the present disclosure. In the drawings:
Fig. 1 is a hardware structure block diagram of a computer terminal for implementing the time-domain sampling point extension method according to some embodiments of the present disclosure;
Fig. 2 is a flowchart of a time-domain sampling point extension method according to some embodiments of the present disclosure;
Fig. 3 is a first schematic diagram for transmitting symbols of a communication / ISAC signal according to some embodiments of the present disclosure;
Fig. 4 is a second schematic diagram for transmitting symbols of a communication / ISAC signal according to some embodiments of the present disclosure;
Fig. 5 is a third schematic diagram for transmitting symbols of a communication / ISAC signal according to some embodiments of the present disclosure;
Fig. 6 is a fourth schematic diagram for transmitting symbols of a communication / ISAC signal according to some embodiments of the present disclosure;
Fig. 7 is a fifth schematic diagram for transmitting symbols of a communication / ISAC signal according to some embodiments of the present disclosure;
Fig. 8 is a sixth schematic diagram for transmitting symbols of a communication / ISAC signal according to some embodiments of the present disclosure; and
Fig. 9 is a structure block diagram of a time-domain sampling point extension device according to some embodiments of the present disclosure.

### Detailed Description of the Embodiments

To enable those having ordinary skill in the art to better understand the solutions of the present disclosure, the technical solutions in the embodiments of the present disclosure will be described clearly and completely in conjunction with the accompanying drawings below. Apparently, the described embodiments are merely part of the embodiments of the present disclosure, rather than all embodiments. All other embodiments obtained by those having ordinary skill in the art based on the embodiments of the present disclosure without creative efforts shall fall within the protection scope of the present disclosure.

It should be noted that the terms such as "first" and "second" used in the specification, claims and accompanying drawings of the present disclosure are intended to distinguish similar objects, and are not necessarily used to describe a specific sequence or order. It should be understood that the data used in this way may be interchanged where appropriate, so that the embodiments of the present disclosure described herein can be implemented in sequences other than those illustrated or described herein. In addition, the terms "comprise/include", "have" and any variations thereof are intended to cover non-exclusive inclusion. For example, a process, method, system, product, or device including a series of operations or units is not limited to those clearly listed operations or units, but may also include other operations or units that are not explicitly listed or inherent to such process, method, product, or device.

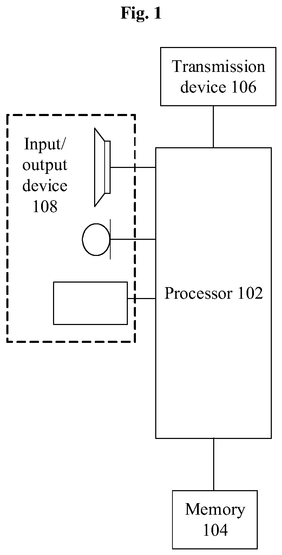

The method embodiments provided in the embodiments of the present disclosure may be executed on a computer terminal or a similar computing device. Taking operation on a computer terminal as an example, Fig. 1 is a hardware structure block diagram of a computer terminal for implementing the time-domain sampling point extension method according to some embodiments of the present disclosure. As shown in Fig. 1, the computer terminal may include one or more processors 102 (only one is shown in Fig. 1). The processor 102 may include, but is not limited to, a Microprocessor Unit (MPU) or a Programmable Logic Device (PLD), and a memory 104 for storing data. In an exemplary embodiment, the computer terminal may further include a transmission device 106 for implementing communication functions and an input/output device 108. Those having ordinary skill in the art may understand that the structure shown in Fig. 1 is merely illustrative and shall not be construed as a limitation on the structure of the computer terminal. For example, the computer terminal may include more or fewer components than those shown in Fig. 1, or adopt different configurations with equivalent or more functions.

The memory 104 may be configured to store computer programs, such as software programs and modules of application software, for example, the computer program corresponding to the time-domain sampling point extension method in the embodiments of the present disclosure. The processor 102 executes various functional applications and data processing by running the computer programs stored in the memory 104, so as to implement the above-mentioned time-domain sampling point extension method. The memory 104 may include a high-speed random access memory, and may also include a non-volatile memory, such as one or more magnetic storage devices, flash memory, or other non-volatile solid-state memories. In some embodiments, the memory 104 may further include a memory remotely disposed relative to the processor 102, and such remote memories may be connected to the computer terminal via a network. Examples of the aforementioned networks include, but are not limited to, the Internet, an enterprise intranet, a local area network, a mobile communication network, and combinations thereof.

The transmission device 106 is configured to receive or transmit data via a network. Specific examples of the network include wireless networks provided by communication service providers of the computer terminal. In one embodiment, the transmission device 106 includes a Network Interface Controller (NIC), which may be connected to other network devices through a base station to communicate with the Internet. In another embodiment, the transmission device 106 may be a Radio Frequency (RF) module, which is configured to communicate with the Internet in a wireless manner.

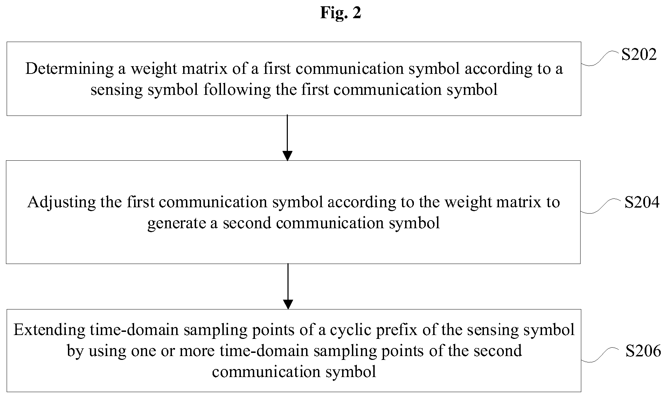

Fig. 2 is a flowchart of a time-domain sampling point extension method according to some embodiments of the present disclosure, applied to the above computer terminal. As shown in Fig. 2, the time-domain sampling point extension method includes the following operations S202 to S206.

In operation S202, a weight matrix of a first communication symbol is determined according to a sensing symbol following the first communication symbol.

In operation S204, the first communication symbol is adjusted according to the weight matrix to generate a second communication symbol.

In operation S206, time-domain sampling points of a cyclic prefix of the sensing symbol are extended by using one or more time-domain sampling points of the second communication symbol.

With the technical solution provided in the embodiments of the present disclosure, a weight matrix of a first communication symbol is determined according to a sensing symbol following the first communication symbol; the first communication symbol is adjusted according to the weight matrix to generate a second communication symbol; and time-domain sampling points of a cyclic prefix of the sensing symbol are extended by using one or more time-domain sampling points of the second communication symbol. According to the technical solutions of the embodiments of the present disclosure, the first communication symbol is adjusted based on the weight matrix to obtain the second communication symbol, and then the time-domain sampling points of the cyclic prefix of the sensing symbol are extended by using one or more time-domain sampling points of the second communication symbol. The above technical solutions solve the problem existing in the related art that no solution has been proposed to extend the cyclic prefix while being compatible with the existing frame structure of the NR system and flexibly supporting various sensing distances. The solution provided is compatible with the existing frame structure of the NR system and can flexibly support extended cyclic prefix for various sensing distances.

As an exemplary implementation, before determining the weight matrix of the first communication symbol according to the sensing symbol following the first communication symbol, the time-domain sampling point extension method further includes: determining a length M of time-domain sampling points of the first communication symbol that are to be cyclically extended, wherein M is a positive integer; and the operation of extending the time-domain sampling points of the cyclic prefix of the sensing symbol by using the one or more time-domain sampling points of the second communication symbol includes: extending the time-domain sampling points of the cyclic prefix of the sensing symbol by using the last M time-domain sampling points of the second communication symbol.

As an exemplary implementation, the operation of adjusting the first communication symbol according to the weight matrix to generate the second communication symbol includes: generating the second communication symbol according to the following formula: *C*₂ = (*I* + *W*)*C*₁, wherein *C*₁ represents the first communication symbol, *C*₂ represents the second communication symbol, *I* represents an identity matrix with a dimension of N×N, *W* represents the weight matrix with a dimension of N×N, and N denotes a quantity of time-domain sampling points of an effective part of the first communication symbol, N being a positive integer. The effective part of the first communication symbol refers to content of the first communication symbol excluding a cyclic prefix of the first communication symbol.

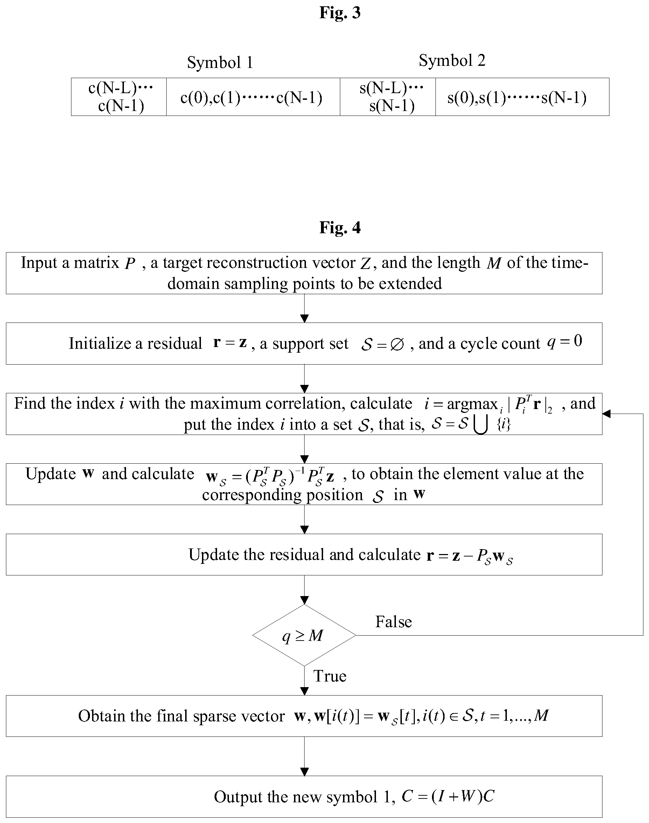

The foregoing implementation scheme is described below with reference to Exemplary Embodiment 1. In this exemplary embodiment of the present disclosure, a base station continuously transmits multiple OFDM symbols. As shown in Fig. 3, two OFDM symbols are taken as an example. Symbol 1 carries a Type 1 signal, such as a communication signal. The time-domain sequence corresponding to the effective part of the Type 1 signal is c(0), c(1), ..., c(N-1). The cyclic prefix of symbol 1 has a length of L sampling points, where L>0, and the sequence corresponding to the cyclic prefix is c(N-L), c(N-L-1), ..., c(N-1). Symbol 2 carries a Type 2 signal, for example, an Integrated Sensing and Communication (ISAC) signal formed by combining a communication signal and a sensing signal. The time-domain sequence corresponding to the effective part of the Type 2 signal is s(0), s(1), ..., s(N-1). The cyclic prefix of symbol 2 also has a length of L sampling points, and the sequence corresponding to the cyclic prefix is s(N-L), s(N-L-1), ..., s(N-1). In this exemplary embodiment, it is assumed that the cyclic prefix of symbol 2 is required to have a length of (L+M) sampling points to meet the operating requirements. Without loss of generality, it is defined herein that 0<M<N.

In the embodiments of the present disclosure, the length M of the time-domain sampling points to be cyclically extended can be set as the number of iterations for updating the weight matrix. Under such configuration, the weight matrix of the first communication symbol is determined according to the sensing symbol following the first communication symbol, and this weight matrix can realize perfect extension.

As an exemplary implementation, the time-domain sequence *s*(*N* - 1 - *L - m*),*m* = 0,1, *2...M* - 1 of the effective part of the Type 2 signal forms a column vector **d,** which is also referred to as a target sequence **d.** The frequency-domain modulated symbols transmitted on symbol 1 in Fig. 3 form an N×1 column vector C, and the *N* × *N* sparse weight matrix corresponding to C is W, then: $F \left(I+W\right) C = d ⇒ FWC = d - FC = z ⇒ Pw = z .$
F represents the last M rows of an IFFT matrix, *F* is a *M* × *N* matrix, and *F*=(*f*₁,.....*f_{N}*).
*I* represents an *N* × *N* identity matrix.
*W* represents an *N* × *N* weight matrix, and *W = diag* (w), w = (*w*₁,...,*w_{N}*)*^{T}*.
*C* represents symbol 1 to be transmitted, and *C* = (*C*₁,.....*C_{N}*)*^{T}*.
**d** denotes a signal required to be generated for extending the cyclic prefix.

Based on the above scheme, the weight *W* can be determined via the following mechanism to generate a new symbol 1: $\left.\begin{matrix}FWC = z \\ W = diag \left(w\right)\end{matrix}\right\} ⇒ Fdiag \left(C\right) w = z ⇒ Pw = z ,$ where *P*₁,...,*P_{N}* are column vectors. $P = Fdiag \left(C\right) = \left({P}_{1},…,{P}_{N}\right) = \left({c}_{1}{f}_{1},…,{c}_{N}{f}_{N}\right) ,$

According to the above relational expression *Pw = z* , the weight vector W can be solved in the process of calculating the new symbol, and the new symbol is finally obtained based on (*I + W*)*C*. Further, as shown in Fig. 4, the solving process includes the following operations.

Operation 1: Input a matrix *P*, a target reconstruction vector **z** , and the length M of the time-domain sampling points to be extended.

Operation 2: Initialize a residual **r = z ,** a support set *S* = Ø , and a full-zero vector **w.**

Operation 3: Find the index *i* with the maximum correlation, calculate $i = {argmax}_{i} {\left|{P}_{i}^{T}r\right|}_{2}$, and put the index *i* into a set *S* , that is, *S* = *S* U {*i*}.

Operation 4: Solve for a new weight vector by using the least square method based on the updated index set, and update the element value at the corresponding position of w . Here, k represents the number of elements contained in the set *S*. ${w}_{S} = {\left({P}_{S}^{T}{P}_{S}\right)}^{- 1} {P}_{S}^{T} z$, **w***_{S}* = (**w**_{*i*(1)},...,**w**_{*i*(*k*)})*^{T}*, *P_{S}* = (*P*_{*i*(1)},...,*P*_{*i*(*k*)}), *S* = {*i*(1),...,*i*(*k*)}.

Operation 5: Repeat Operation 3 and Operation 4 for M times to obtain the subcarrier indexes for reconstructing the target vector and the corresponding weights.

Operation 6: Update the weights at corresponding positions according to the final index set and **w***_{S}*. For the sparse vector w, **w**[*i*(*t*)] *= **w**_{S}*[*t*],*i*(*t*) ∈ *S*, where *t* = 1...*M .*

Operation 7: Return the new symbol 1, *C =* (*I + W*)*C,* where w = diag(W).

Operation 8: Take the last M time-domain sampling points of the new symbol 1 as the cyclic extension part of the signal of symbol 2. That is, the last M sampling points of symbol 1 can be used as the cyclic prefix of symbol 1: $c \left(N-1-m\right) = d \left(M-1-m\right) = s \left(N-1-L-m\right) ,$ *m =* 0,1, *2...M* -1 . Furthermore, to mitigate adverse impacts on communication performance, the transmitting end may notify the receiving end of a quantized value of w.

As an exemplary implementation, the operation of determining the weight matrix of the first communication symbol according to the sensing symbol following the first communication symbol includes: determining a tolerance threshold *η* of a residual norm corresponding to the first communication symbol; performing the following updating operation: updating element values of a target weight matrix and determining the residual norm corresponding to the updated weight matrix according to a correspondence between the target weight matrix and the residual norm; repeatedly performing the updating operation until the finally determined residual norm is less than the tolerance threshold *η*; and determining a weight vector corresponding to the finally determined residual norm as the weight matrix. It should be noted that after the tolerance threshold is determined, the target weight matrix is initialized, with all elements of the target weight matrix being zero at this time.

The foregoing solution for determining the weight matrix is described below with reference to Exemplary Embodiment 2.

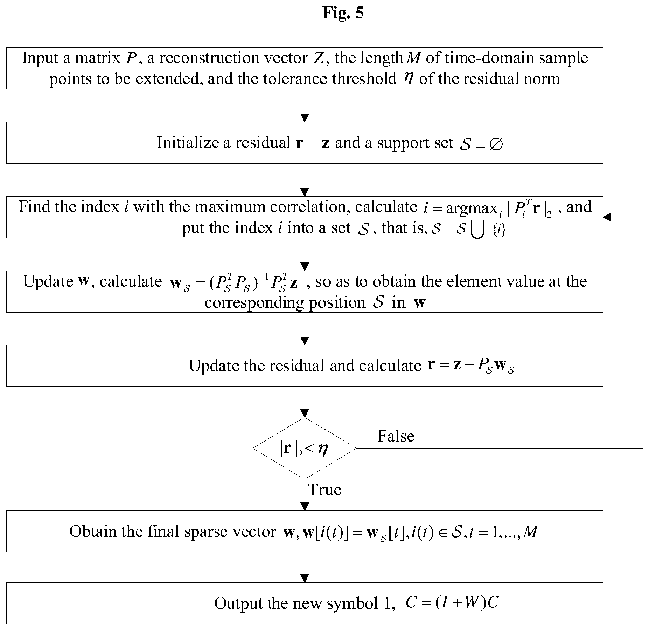

Based on the application scenario of Exemplary Embodiment 1, the solving process of the new symbol is as shown in Fig. 5 and includes the following operations:
Operation 1: Input a matrix *P*, a reconstruction vector **z**, and the tolerance threshold *η* of the residual norm.
Operation 2: Initialize a residual **r** = **z**, a support set *S* = Ø , and a full-zero vector **w**.
Operation 3: Find the index *i* with the maximum correlation, calculate $i = {argmax}_{i} {\left|{P}_{i}^{T}r\right|}_{2}$, and put the index *i* into a set *S* , that is, *S* = *S* ∪ {*i*} .
Operation 4: Update the element value at the corresponding position of **w** according to the following formula: ${w}_{S} = {\left({P}_{S}^{T}{P}_{S}\right)}^{- 1} {P}_{S}^{T} z , {w}_{S} = {\left({w}_{i \left(1\right)},…,{w}_{i \left(k\right)}\right)}^{T} , {P}_{S} = \left({P}_{i \left(1\right)},…,{P}_{i \left(k\right)}\right) , S = \left\{i\left(1\right),…,i\left(k\right)\right\} .$
Operation 5: Update the residual and calculate **r** = **z** - *P_{S}***w***_{S}* .
Repeat Operation 3 to Operation 5 until the residual norm is less than the threshold, i.e., |**r**|₂<*η*.
Operation 6: Obtain the final sparse vector w, **w**[*i*(*t*)] *= **w**_{S}*[*t*],*i*(*t*) ∈ *S,* where *t* = 1,...,*M .*

Output the new symbol 1, *C =* (*I* + *W*)*C .*

With the above solution, a sampling point sequence for extending the cyclic prefix of the sensing symbol can be generated based on the new symbol 1, and the residual norm between this sequence and the target sequence **d** is less than the threshold. In the embodiments of the present disclosure, a smaller threshold *η* corresponds to a higher sparsity of w. The selection of the threshold *η* can achieve a trade-off between sensing performance and communication performance. A larger threshold *η* means fewer subcarriers that affect communication.

As an exemplary implementation, before determining the weight matrix of the first communication symbol, the time-domain sampling point extension method further includes: determining a signal d to be generated by the one or more time-domain sampling points, wherein the signal d is an arbitrary signal with a length of M, and the signal d includes at least one of: extended sampling points for the cyclic prefix of the sensing symbol, a linear frequency modulation signal with M sampling points, or a constant amplitude zero auto-correlation signal with a length of M.

In Exemplary Embodiments 1 to 3 of the present disclosure, the vector d is defined as follows: $d = {\left[s\left(N-L-M\right),s\left(N-L-M+1\right),…,s\left(N-L-1\right)\right]}^{T} .$ Herein, d may be any signal with a length of M. For example, d may be samples of a linear frequency modulation signal with M sampling points, or a Constant Amplitude Zero Auto-Correlation (CAZAC) signal with a length of M. Further, the corresponding weight vector w can be obtained by adopting the method for solving the new symbol described in the foregoing embodiments, so as to generate the required signal.

The value of M falls into two cases: M =1 and M = µ > 1.

In Exemplary Embodiment 4, when M = 1, the weight matrix is a sparse vector having only one non-zero element. Herein, k denotes the element index of the non-zero element, where the element index k is configured by a system, and k is a positive integer. As an exemplary implementation, the difference z between the target time-domain sequence and the current sequence is non-zero, and *P* is a 1 × *N* row vector. The weight vector **w** is a sparse vector having only one non-zero element, where k represents the element index of the non-zero element and can be configured by a system. The k-th element of *P is Pₖ*, and the non-zero element ***w**ₖ* of **w** can be calculated according to **w***ₖ =z*/ *Pₖ*.

In Exemplary Embodiment 5, when M = µ > 1, the recursion process is performed µ -1 times on the basis of the weight vector result obtained when M=1 in Exemplary Embodiment 4, so as to obtain weight vectors corresponding to M = 2, 3, 4, ..., µ sequentially, and the signal for extending time-domain sampling points is ultimately acquired. The recursion process is defined as follows: when M = µ > 1, given the frequency-domain symbol *C*^{(*µ*-1)} and its corresponding weight vector **w**^{(*µ*-1)}, the weight vector for M = µ can be derived from the result corresponding to M = µ -1. The weight vector **w**^{(*µ*)} is obtained through the following specific operations:
Operation 1: Acquire an observation matrix *P*^{(*µ*)} *= FC*^{(*µ-*1)} with a dimension of 1× *N* for M = µ according to the known frequency-domain symbol *C*^{(*µ*-1)}.
Operation 2: Select the index that minimizes the weight vector based on the *N - L - µ* -th time-domain sampling point, and calculate the weight based on the following formula: ${x}_{k} = {z}_{N - L - μ} / {P}_{k}^{\left(μ\right)}$, *k* = argmin*ᵢ* |**x***ᵢ* |₂.
Operation 3: Update the corresponding index value to obtain the updated weight vector ${w}_{k}^{\left(μ\right)} = {x}_{k} + {x}_{k} {w}_{k}^{\left(μ-1\right)}$.

The recursion process is completed hereby.

Finally, the required signal is generated by executing Operation 8 specified in Exemplary Embodiment 1.

According to Exemplary Embodiments 4 and 5 above, the frequency-domain symbol corresponding to M = 1 can be obtained according to Exemplary Embodiment 4, and the frequency-domain symbols corresponding to M = 2,3.... can be obtained according to Exemplary Embodiment 5.

As an exemplary implementation, the time-domain sampling point extension method further includes: in a case where the first communication symbol has L subcarriers not used for communication and L is greater than M, determining that only M subcarriers of the L subcarriers in the second communication symbol are adopted to generate time-domain signals for extending the cyclic prefix, wherein L and M are positive integers. In the exemplary embodiments of the present disclosure, assume that symbol 1 has k subcarriers not used for communication, whose index set is 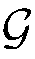 . If all of these subcarriers are adopted to generate the designated suffix of the time-domain symbol, the following two methods can be applied.

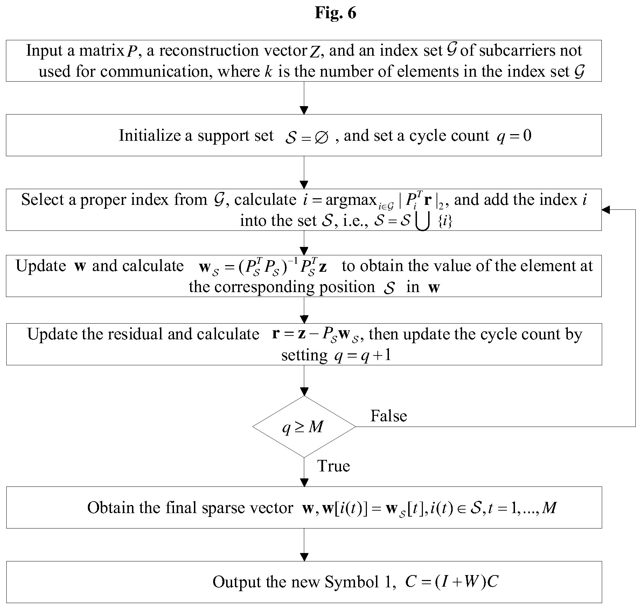

Method 1: When k > M, the solving process of the new symbol is as shown in Fig. 6 and includes the following operations:
Operation 1: Input a matrix P, a reconstruction vector **z** , and an index set 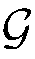 of subcarriers not used for communication, where K is the number of elements in the above index set 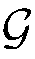 .
Operation 2: Initialize a support set *S* = Ø and a full-zero vector **w** , and set a cycle count q=0.
Operation 3: Select a proper index from 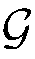 , calculate $i = {argmax}_{i ∈ G} {\left|{P}_{i}^{T}r\right|}_{2}$, and add the index i into the set *S,* i.e., *S = S* ∪ {*i*}.
Operation 4: Update w and calculate ${w}_{S} = {\left({P}_{S}^{T}{P}_{S}\right)}^{- 1} {P}_{S}^{T} z$ to obtain the value of the element at the corresponding position *S* in **w**.
Operation 5: Update the residual and calculate **r** = **z** *- P_{S}***w***_{S},* then update the cycle count by setting q=q+1.
Repeat Operation 3 to Operation 5 for M times.
Operation 6: Obtain the final sparse vector w, **w**[*i*(*t*)] *=* **w***_{S}*[*t*],*i*(*t*) ∈ *S,* where *t* = 1,...,*M .*
Operation 7: Output the new Symbol 1, *C =* (*I + W*)*C.* Only M subcarriers not used for communication among the foregoing subcarriers are adopted to generate time-domain signals for extending the cyclic prefix of the sensing symbol.

As an exemplary implementation, the time-domain sampling point extension method further includes: in a case where the first communication symbol has L subcarriers not used for communication and L is less than or equal to M, determining that all of the L subcarriers not used for communication in the second communication symbol are adopted to generate time-domain signals for extending the cyclic prefix, and Q subcarriers used for communication in the second communication symbol participate in extending the cyclic prefix, wherein Q=M-L, and Q is a positive integer.

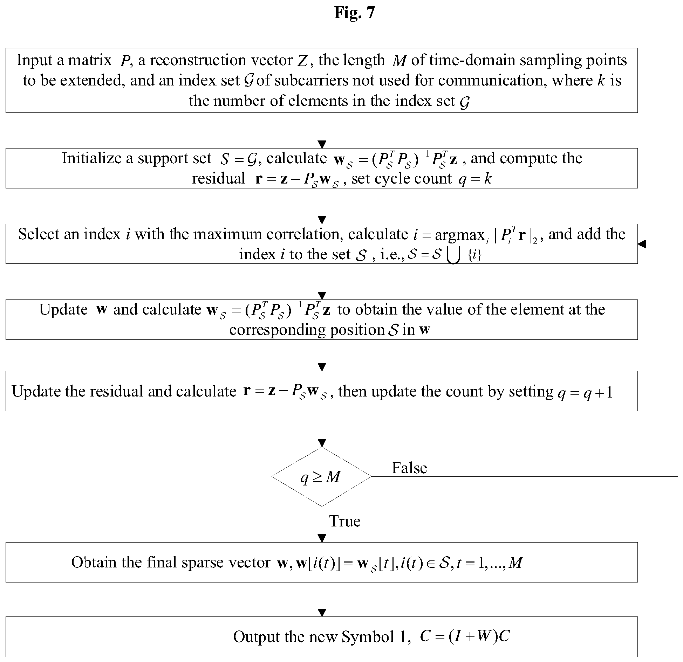

Method 2: When *k* ≤ *M* , the solving process of the new symbol is as shown in Fig. 7 and includes the following operations:
Operation 1: Input a matrix *P*, a reconstruction vector **z**, the length M of time-domain sampling points to be extended, and an index set 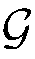 of subcarriers not used for communication, where K is the number of elements in the above index set 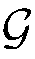 , and a cycle count is set as follows: q=K.
Operation 2: Initialize a support set *S* = 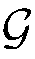 *,* calculate ${w}_{S} = {\left({P}_{S}^{T}{P}_{S}\right)}^{- 1} {P}_{S}^{T} z$, and compute the residual **r** *=* **z** *- P_{S}***w***_{S}.*
Operation 3: Select a proper index from the communication subcarriers and add the index to the support set, calculate $i = {argmax}_{i} {\left|{P}_{i}^{T}r\right|}_{2}$, and add the index i into the set *S,* i.e., *S* = *S* ∪ {*i*}.
Operation 4: Update w and calculate ${w}_{S} = {\left({P}_{S}^{T}{P}_{S}\right)}^{- 1} {P}_{S}^{T} z$ to obtain the value of the element at the corresponding position *S* in **w**.
Operation 5: Update the residual and calculate **r** *=* **z** *- P_{S}***w***_{S},* then update the count by setting q=q+1.
Repeat Operation 3 to Operation 5 for M-k times.
Operation 6: Obtain the final sparse vector w, **w**[*i*(*t*)] *=* **w***_{S}*[*t*],*i*(*t*) ∈ *S,* where *t* = 1,...,*M.*
Operation 7: Output the new Symbol 1, *C =* (*I + W*)*C.*

With the above implementation, only k subcarriers not used for communication of this symbol are adopted to generate time-domain signals for extending the cyclic prefix of the sensing symbol, and another (M-k) communication-purpose subcarriers participate in extending the cyclic prefix of the sensing symbol.

As an exemplary implementation, the time-domain sampling point extension method further includes: in a case where the first communication symbol has L subcarriers not used for communication, determining that only J subcarriers of the L subcarriers in the second communication symbol are adopted to generate time-domain signals for extending the cyclic prefix, wherein J is a positive integer less than L.

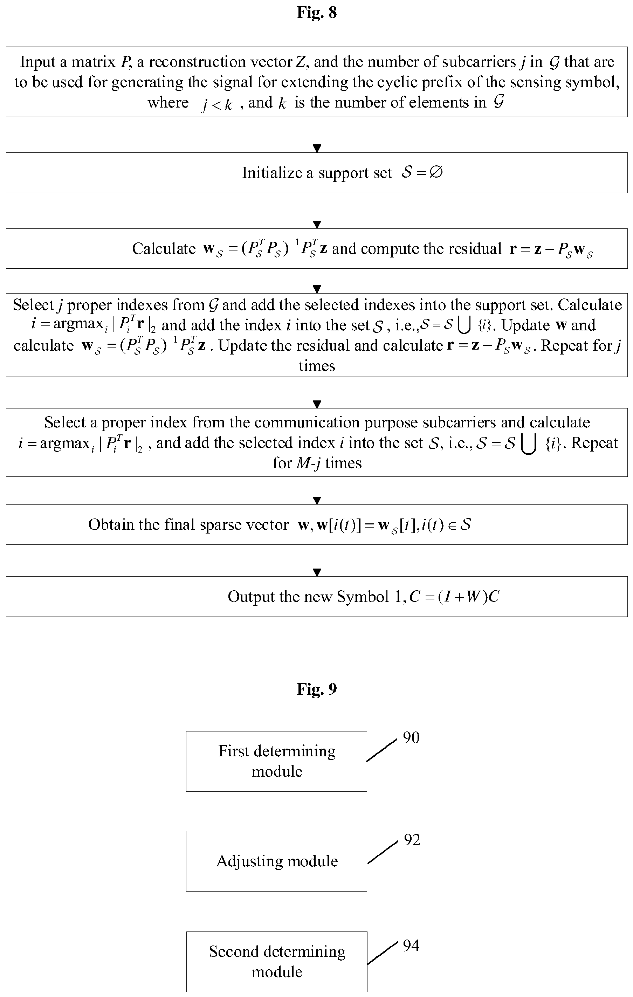

In the exemplary embodiments of the present disclosure, only j subcarriers not used for communication are adopted, where j<k. As shown in Fig. 8, the method includes the following operations:
Operation 1: Input a matrix P, a reconstruction vector **z**, and the number of subcarriers *j* in 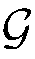 that are to be used for generating the signal for extending the cyclic prefix of the sensing symbol, where *j < k.*
Operation 2: Initialize a support set *S =* Ø , calculate ${w}_{S} = {\left({P}_{S}^{T}{P}_{S}\right)}^{- 1} {P}_{S}^{T} z$, and compute the residual **r = z** - *P_{S}***w***_{S}*.
Operation 3: Calculate ${w}_{S} = {\left({P}_{S}^{T}{P}_{S}\right)}^{- 1} {P}_{S}^{T} z$ and compute the residual **r = z** *- P_{S}***w***_{S}.*
Operation 4: Select j proper indexes from 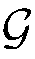 and add the selected indexes into the support set. Calculate $i = {argmax}_{i} {\left|{P}_{i}^{T}r\right|}_{2}$ and add the index i into the set *S,* i.e., *S* = *S* ∪ {*i*}. Update w and calculate ${w}_{S} = {\left({P}_{S}^{T}{P}_{S}\right)}^{- 1} {P}_{S}^{T} z$. Repeat the current operation for j times.
Operation 5: Select a proper index from the communication purpose subcarriers and add the selected index into the support set. Calculate $i = {argmax}_{i} {\left|{P}_{i}^{T}r\right|}_{2}$ and add the index i into the set *S, i.e., S = S* ∪ {*i*}. Repeat the current operation for M-j times.
Operation 6: Obtain the final sparse vector w, **w**[*i*(*t*)] *=* **w***_{S}*[*t*], *i*(*t*) ∈ *S,* where *t* = 1,...,*M .*
Operation 7: Output the new Symbol 1, *C =* (*I + W*)*C.*

In summary, with the implementation solution of the embodiments of the present disclosure, a time-domain signal with a specific length of M can be generated from the communication symbol by determining the subcarrier weight vector of the communication symbol. In addition, the embodiments of the present disclosure may send the quantized value of the weight vector to the UE, so as to further reduce the adverse impact on communication performance.

This embodiment further provides a time-domain sampling point extension device, which is configured to implement the foregoing embodiments and exemplary implementations. Details that have been described above will not be repeated herein. As used hereinafter, the term "module" refers to a combination of software and/or hardware capable of performing predetermined functions. Although the device described in the following embodiments is preferably implemented by software, implementation by hardware or a combination of software and hardware is also feasible and contemplated.

Fig. 9 is a structure block diagram of a time-domain sampling point extension device according to some embodiments of the present disclosure. As shown in Fig. 9, the time-domain sampling point extension device includes:
a first determining module 90, configured to determine a weight matrix of a first communication symbol according to a sensing symbol following the first communication symbol;
an adjusting module 92, configured to adjust the first communication symbol according to the weight matrix to generate a second communication symbol; and
a second determining module 94, configured to extend time-domain sampling points of a cyclic prefix of the sensing symbol by using one or more time-domain sampling points of the second communication symbol.

With the technical solution provided in the embodiments of the present disclosure, a weight matrix of a first communication symbol is determined according to a sensing symbol following the first communication symbol; the first communication symbol is adjusted according to the weight matrix to generate a second communication symbol; and time-domain sampling points of a cyclic prefix of the sensing symbol are extended by using one or more time-domain sampling points of the second communication symbol. According to the technical solutions of the embodiments of the present disclosure, the first communication symbol is adjusted based on the weight matrix to obtain the second communication symbol, and then the time-domain sampling points of the cyclic prefix of the sensing symbol are extended by using one or more time-domain sampling points of the second communication symbol. The above technical solutions solve the problem existing in the related art that no solution has been proposed to extend the cyclic prefix while being compatible with the existing frame structure of the NR system and flexibly supporting various sensing distances. The solution provided is compatible with the existing frame structure of the NR system and can flexibly support extended cyclic prefix for various sensing distances.

In an exemplary embodiment, the first determining module 90 is further configured to determine a length M of time-domain sampling points of the first communication symbol that are to be cyclically extended, wherein M is a positive integer; and the operation of extending the time-domain sampling points of the cyclic prefix of the sensing symbol by using the one or more time-domain sampling points of the second communication symbol includes: extending the time-domain sampling points of the cyclic prefix of the sensing symbol by using the last M time-domain sampling points of the second communication symbol.

In an exemplary embodiment, the first determining module 90 is further configured to generate the second communication symbol according to the following formula: *C*₂ *=* (*I* + *W*)*C*₁, wherein *C*₁ represents the first communication symbol, *C*₂ represents the second communication symbol, *I* represents an identity matrix with a dimension of N×N, *W* represents the weight matrix with a dimension of N×N, and N denotes a quantity of time-domain sampling points of an effective part of the first communication symbol, N being a positive integer.

In an exemplary embodiment, the first determining module 90 is further configured to determine a tolerance threshold *η* of a residual norm corresponding to the first communication symbol; perform the following updating operation: updating element values of a target weight matrix and determining the residual norm corresponding to the updated weight matrix according to a correspondence between the target weight matrix and the residual norm; repeatedly perform the updating operation until the finally determined residual norm is less than the tolerance threshold *η*; and determine a weight vector corresponding to the finally determined residual norm as the weight matrix.

In an exemplary embodiment, the first determining module 90 is further configured to determine a signal d to be generated by the one or more time-domain sampling points, wherein the signal d is an arbitrary signal with a length of M, and the signal d includes at least one of: extended sampling points for the cyclic prefix of the sensing symbol, a linear frequency modulation signal with M sampling points, or a constant amplitude zero auto-correlation signal with a length of M.

In an exemplary embodiment, in a case where M is equal to 1, the weight matrix is a sparse vector having only one non-zero element, wherein k denotes an element index of the non-zero element, the element index k is configured by a system, and k is a positive integer.

In an exemplary embodiment, in a case where the first communication symbol has L subcarriers not used for communication and L is greater than M, only M subcarriers of the L subcarriers in the second communication symbol are adopted to generate time-domain signals for extending the cyclic prefix, wherein L and M are positive integers.

In an exemplary embodiment, in a case where the first communication symbol has L subcarriers not used for communication and L is less than or equal to M, all of the L subcarriers not used for communication in the second communication symbol are adopted to generate time-domain signals for extending the cyclic prefix, and Q subcarriers used for communication in the second communication symbol participate in extending the cyclic prefix, wherein Q=M-L, and Q is a positive integer.

In an exemplary embodiment, in a case where the first communication symbol has L subcarriers not used for communication, only J subcarriers of the L subcarriers in the second communication symbol are adopted to generate time-domain signals for extending the cyclic prefix, wherein J is a positive integer less than L.

From the above description of the implementations, those having ordinary skill in the art can clearly understand that the methods according to the foregoing embodiments can be implemented by means of software combined with a general-purpose hardware platform. Apparently, implementation by hardware is also feasible, while the former is an exemplary implementation in most cases. Based on such understanding, the technical solutions of the present disclosure, or the parts contributing to the prior art, may be embodied in the form of a computer software product. The computer software product is stored in a readable storage medium (such as ROM/RAM, magnetic disk, optical disc), and includes several instructions for instructing a terminal device (such as a mobile phone, a computer, a server or a network device) to execute the methods according to various embodiments of the present disclosure.

In an exemplary embodiment, the computer-readable storage medium includes, but is not limited to, various media capable of storing computer programs, such as a Universal Serial Bus (USB) flash drive, a Read-Only Memory (ROM), a Random Access Memory (RAM), a removable hard disk, a magnetic disk, or an optical disc.

For specific examples in this embodiment, reference may be made to the examples described in the foregoing embodiments and exemplary implementations, which will not be elaborated herein.

The embodiments of the present disclosure further provide an electronic device, which includes a memory and a processor. The memory stores a computer program, and the processor is configured to run the computer program to execute the operations according to any of the foregoing method embodiments.

Optionally, in this embodiment, the processor may be configured to execute the following operations by running the computer program:
In operation S1, a weight matrix of a first communication symbol is determined according to a sensing symbol following the first communication symbol.
In operation S2, the first communication symbol is adjusted according to the weight matrix to generate a second communication symbol.
In operation S3, time-domain sampling points of a cyclic prefix of the sensing symbol are extended by using one or more time-domain sampling points of the second communication symbol.

In an exemplary embodiment, the electronic device may further include a transmission device and an input/output device. The transmission device is connected to the processor, and the input/output device is connected to the processor.

Optionally, the electronic device is configured to execute the above operations S1, S2 and S3 through running the computer program.

For specific examples in this embodiment, reference may be made to the examples described in the foregoing embodiments and exemplary implementations, which will not be elaborated herein.

Apparently, those having ordinary skill in the art shall appreciate that each module or each operation of the present disclosure described above may be implemented by a general computing device. They may be centralized on a single computing device or distributed over a network composed of multiple computing devices. They may be implemented by program codes executable by the computing device, so as to be stored in a storage device for execution by the computing device. In some cases, the shown or described operations may be executed in an order different from that described herein. Alternatively, each module or operation may be manufactured into individual integrated circuit modules, or a plurality of modules or operations may be manufactured into a single integrated circuit module. Therefore, the present disclosure is not limited to any specific combination of hardware and software.

The above descriptions are merely preferred embodiments of the present disclosure, and are not intended to limit the present disclosure. Various modifications and variations may be made by those having ordinary skill in the art within the scope of the present disclosure. Any modification, equivalent replacement, improvement, and the like made within the principle of the present disclosure shall fall within the protection scope of the present disclosure.

## Claims

1. A time-domain sampling point extension method, comprising:
determining a weight matrix of a first communication symbol according to a sensing symbol following the first communication symbol;
adjusting the first communication symbol according to the weight matrix to generate a second communication symbol; and
extending time-domain sampling points of a cyclic prefix of the sensing symbol by using one or more time-domain sampling points of the second communication symbol.

2. The time-domain sampling point extension method according to claim 1, wherein before determining the weight matrix of the first communication symbol according to the sensing symbol following the first communication symbol, the time-domain sampling point extension method further comprises:
determining a length M of time-domain sampling points of the first communication symbol that are to be cyclically extended, wherein M is a positive integer; and
extending the time-domain sampling points of the cyclic prefix of the sensing symbol by using the one or more time-domain sampling points of the second communication symbol comprises:
extending the time-domain sampling points of the cyclic prefix of the sensing symbol by using the last M time-domain sampling points of the second communication symbol.

3. The time-domain sampling point extension method according to claim 2, wherein adjusting the first communication symbol according to the weight matrix to generate the second communication symbol comprises:
generating the second communication symbol according to the following formula:
*C*₂=(*I+W*)*C*₁, wherein *C*₁ represents the first communication symbol, *C*₂ represents the second communication symbol, *I* represents an identity matrix with a dimension of N×N, W represents the weight matrix with a dimension of N×N, and N denotes a quantity of time-domain sampling points of an effective part of the first communication symbol, N being a positive integer.

4. The time-domain sampling point extension method according to claim 1, wherein determining the weight matrix of the first communication symbol according to the sensing symbol following the first communication symbol comprises:
determining a tolerance threshold *η* of a residual norm corresponding to the first communication symbol;
performing the following updating operation: updating element values of a target weight matrix and determining the residual norm corresponding to the updated weight matrix according to a correspondence between the target weight matrix and the residual norm;
repeatedly performing the updating operation until the finally determined residual norm is less than the tolerance threshold *η* ; and
determining a weight vector corresponding to the finally determined residual norm as the weight matrix.

5. The time-domain sampling point extension method according to claim 1, wherein before determining the weight matrix of the first communication symbol, the time-domain sampling point extension method further comprises:
determining a signal d to be generated by the one or more time-domain sampling points, wherein the signal d is an arbitrary signal with a length of M, and the signal d comprises at least one of: extended sampling points for the cyclic prefix of the sensing symbol, a linear frequency modulation signal with M sampling points, or a constant amplitude zero auto-correlation signal with a length of M.

6. The time-domain sampling point extension method according to claim 5, further comprising:
in a case where M is equal to 1, determining that the weight matrix is a sparse vector having only one non-zero element, wherein k denotes an element index of the non-zero element, the element index k is configured by a system, and k is a positive integer.

7. The time-domain sampling point extension method according to claim 1, further comprising:
in a case where the first communication symbol has L subcarriers not used for communication and L is greater than M, determining that only M subcarriers of the L subcarriers in the second communication symbol are adopted to generate time-domain signals for extending the cyclic prefix, wherein L and M are positive integers.

8. The time-domain sampling point extension method according to claim 1, further comprising:
in a case where the first communication symbol has L subcarriers not used for communication and L is less than or equal to M, determining that all of the L subcarriers not used for communication in the second communication symbol are adopted to generate time-domain signals for extending the cyclic prefix, and Q subcarriers used for communication in the second communication symbol participate in extending the cyclic prefix, wherein Q=M-L, and Q is a positive integer.

9. The time-domain sampling point extension method according to claim 1, further comprising:
in a case where the first communication symbol has L subcarriers not used for communication, determining that only J subcarriers of the L subcarriers in the second communication symbol are adopted to generate time-domain signals for extending the cyclic prefix, wherein J is a positive integer less than L.

10. A time-domain sampling point extension device, comprising:
a first determining module, configured to determine a weight matrix of a first communication symbol according to a sensing symbol following the first communication symbol;
an adjusting module, configured to adjust the first communication symbol according to the weight matrix to generate a second communication symbol; and
a second determining module, configured to extend time-domain sampling points of a cyclic prefix of the sensing symbol by using one or more time-domain sampling points of the second communication symbol.

11. A computer-readable storage medium, wherein a computer program is stored in the computer-readable storage medium, and the computer program, when executed, implements the time-domain sampling point extension method according to any one of claims 1 to 9.

12. An electronic device, comprising a memory and a processor, wherein the memory stores a computer program, and the processor is configured to run the computer program to execute the time-domain sampling point extension method according to any one of claims 1 to 9.
